# FASCICULE DE BREVET EUROPEEN

(11) **EP 3 912 537 B1**
(45) Date de publication et mention de la délivrance du brevet: **17.12.2025**
(21) Numéro de dépôt: 21174214.3
(22) Date de dépôt: 17.05.2021
(51) Int. Cl.: A47J 43/06, A47J 43/08, A47J 43/10, A47J 43/044

(54) **APPAREIL ET SYSTÈME ÉLECTROMÉNAGER DE PRÉPARATION CULINAIRE À ENTRAÎNEMENT COPLANAIRE**
ELEKTROHAUSHALTSGERÄT UND -SYSTEM ZUR ZUBEREITUNG VON SPEISEN MIT KOPLANAREM ANTRIEB
KITCHEN DEVICE AND SYSTEM FOR FOOD PREPARATION WITH COPLANAR DRIVE

(30) Priorité: 18.05.2020 FR 2004919
(43) Date de publication de la demande: 24.11.2021
(73) Titulaire: SEB S.A., 69130 Ecully (FR)
(72) Inventeur: RETOUR, Stéphane, 53470 COMMER (FR); LEMERCIER, Michel, 53250 JAVRON-LES-CHAPELLES (FR); FOULONNEAU, Stéphane, 72650 LA MILESSE (FR)
(74) Mandataire: SEB Développement

(56) Documents cités:
- WO-A1-2011/144820
- WO-A1-2018/036780
- CH-A- 337 999
- CN-A- 103 720 387
- FR-A1- 2 844 442
- GB-A- 2 453 546
- US-A1- 2015 230 480

## Description

### Domaine Technique

L'invention concerne le domaine technique général des appareils électroménagers de préparation culinaire comportant un socle destiné à recevoir un récipient de travail, par exemple une cuve, et comprenant une tête solidaire du socle comportant un porte-satellites pour l'entraînement d'un outil de travail, le porte-satellites étant entraîné en rotation autour d'un axe central par un moteur.

### Technique antérieure

Dans les appareils électroménagers de préparation culinaire conventionnels du type précité, le porte-satellites comprend généralement un coupleur excentré permettant l'entraînement d'un outil de travail au-dessus du socle selon un mouvement satellitaire combinant deux rotations autour de deux axes parallèles. Un tel appareil peut être utilisé avec différents outils de travail montés alternativement sur le même coupleur, adaptés à différents travaux culinaires. Ces appareils sont souvent désignés par l'appellation de « robot pâtissier », même s'ils peuvent souvent être utilisés pour des préparations autres que la pâtisserie.

Par exemple on connait des outils de travail de type « pétrin », comportant généralement un ou plusieurs bras rigides, pour permettre le malaxage de pâtes dans le récipient de travail.

On connait aussi des outils de travail de type « fouet », comportant généralement un ou plusieurs brins fins, qui peuvent être utilisés pour émulsionner une préparation contenue dans le récipient de travail.

Dans les robots pâtissiers, le porte-satellites est généralement entraîné en rotation à une vitesse relativement faible, par exemple comprise entre 40 et 250 tours par minute. Les plus basses vitesses sont bien adaptées à certains travaux culinaires, et donc à certains outils de travail prévus pour ces travaux, par exemple pour les outils de travail de type « pétrin ». Cependant, certains travaux culinaires, et les outils de travail qui leur sont dédiés, nécessitent ou encore tirent profit de vitesses de rotation plus élevées de l'outil de travail. C'est le cas par exemple des outils de travail de type « fouet ».

On connait par ailleurs, par exemple du document GB2453546 un appareil électroménager de préparation culinaire qui est prévu pour pouvoir entraîner deux types d'outils de travail de types différents, qui sont prévus pour être mis en œuvre de manière optimale à des vitesses différentes. Cet appareil comporte :
- un socle présentant une embase ayant une zone d'accueil configurée pour recevoir un récipient de travail;
- une tête liée au socle, la tête ayant un porte-satellites qui est entraîné en rotation autour d'un axe central par un moteur, et qui porte :
   ▪ un premier satellite d'entraînement, monté à libre rotation sur le porte-satellites autour d'un premier axe de travail, parallèle à l'axe central et excentré par rapport à l'axe central, le premier satellite d'entraînement comportant :
      ◊ un premier coupleur configuré pour permettre un accouplement et un désaccouplement d'un premier outil de travail et pour assurer l'entraînement du premier outil de travail en rotation autour du premier axe de travail par rapport au porte-satellites, le premier coupleur étant agencé en regard de la zone d'accueil ;
      ◊ une première roue dentée d'entraînement qui a pour axe le premier axe de travail, qui est solidaire en rotation du premier satellite d'entraînement, et qui coopère avec une denture interne d'une couronne périphérique ayant l'axe central comme axe de symétrie pour, lors d'une rotation différentielle du porte-satellites par rapport à la couronne périphérique, provoquer une rotation du premier satellite d'entraînement sur lui-même autour du premier axe de travail ;
   ▪ un deuxième satellite d'entraînement, distinct du premier satellite d'entraînement et monté à libre rotation sur le porte-satellites autour d'un deuxième axe de travail, parallèle à l'axe central et excentré par rapport à l'axe central tout en étant distinct du premier axe de travail, le deuxième satellite d'entraînement comportant :
      un deuxième coupleur configuré pour permettre un accouplement et un désaccouplement d'un deuxième outil de travail et pour assurer l'entraînement du deuxième outil de travail en rotation autour du deuxième axe de travail par rapport au porte-satellites, le deuxième coupleur étant agencé en regard de la zone d'accueil ;
      ◊ une deuxième roue dentée d'entrainement qui a pour axe le deuxième axe de travail et qui est solidaire en rotation du deuxième satellite d'entraînement.

Dans cet exemple, la deuxième roue dentée d'entrainement engrène avec une deuxième couronne périphérique ayant l'axe central comme axe de symétrie pour entraîner le deuxième satellite d'entrainement en rotation sur lui-même autour du deuxième axe de travail.

Les deux couronnes sont superposées selon la direction de l'axe central, et l'une d'entre elles présente une denture conique, ce qui s'avère complexe à réaliser et ce qui entraîne un encombrement important selon la direction de l'axe central.

Le document WO 2018/036780 A1 décrit également un appareil électroménager de préparation culinaire.

### Exposé de l'invention

L'invention a pour but de proposer un appareil électroménager de préparation culinaire proposant un premier coupleur d'outil de travail et un deuxième coupleur d'outil de travail qui tournent, autour de leur axe de travail respectif, respectivement à des vitesses de rotation dont les valeurs absolues sont différentes l'une de l'autre, tout en conservant une construction simple, compacte, et ne nécessitant pas de modification majeure de l'architecture des appareils existants.

Dans ce but, l'invention propose un appareil électroménager de préparation culinaire comportant :
- un socle présentant une embase ayant une zone d'accueil configurée pour recevoir un récipient de travail ;
- une tête liée au socle, la tête ayant un porte-satellites qui est entraîné en rotation autour d'un axe central par un moteur, et qui porte :
   un premier satellite d'entraînement, monté à libre rotation sur le porte-satellites autour d'un premier axe de travail , parallèle à l'axe central et excentré par rapport à l'axe central, le premier satellite d'entraînement comportant :
      - un premier coupleur configuré pour permettre un accouplement et un désaccouplement d'un premier outil de travail et pour assurer l'entraînement en rotation du premier outil de travail autour du premier axe de travail par rapport au porte-satellites, le premier coupleur étant agencé en regard de la zone d'accueil ;
      - une première roue dentée d'entraînement qui a pour axe le premier axe de travail, qui est solidaire en rotation du premier satellite d'entraînement, et qui coopère avec une denture interne d'une couronne périphérique ayant l'axe central comme axe de symétrie pour, lors d'une rotation différentielle du porte-satellites par rapport à la couronne périphérique, provoquer une rotation du premier satellite d'entraînement sur lui-même autour du premier axe de travail ;
   ◊ un deuxième satellite d'entraînement, distinct du premier satellite d'entraînement et monté à libre rotation sur le porte-satellites autour d'un deuxième axe de travail, parallèle à l'axe central et excentré par rapport à l'axe central tout en étant distinct du premier axe de travail, le deuxième satellite d'entraînement comportant :
      - un deuxième coupleur configuré pour permettre un accouplement et un désaccouplement d'un deuxième outil de travail et pour assurer l'entraînement en rotation du deuxième outil de travail autour du deuxième axe de travail par rapport au porte-satellites, le deuxième coupleur étant agencé en regard de la zone d'accueil ;
      - une deuxième roue dentée d'entrainement qui a pour axe le deuxième axe de travail et qui est solidaire en rotation du deuxième satellite d'entraînement.

L'appareil électroménager de préparation culinaire est du type dans lequel, pour une vitesse de rotation donnée du porte-satellites, le premier satellite d'entraînement et le deuxième satellite d'entraînement tournent, autour de leur axe de travail respectif respectivement à des vitesses de rotation différentes l'une de l'autre en valeur absolue.

L'appareil électroménager de préparation culinaire est caractérisé en ce que la deuxième roue dentée d'entrainement coopère avec la première roue dentée d'entraînement de telle sorte que la première roue dentée d'entraînement entraîne la deuxième roue dentée d'entraînement et le deuxième satellite d'entrainement en rotation sur eux-mêmes autour du deuxième axe de travail, en ce que la couronne périphérique, la première roue dentée d'entraînement et la deuxième roue dentée d'entraînement sont coplanaires, et en ce que le premier coupleur et le deuxième coupleur présentent respectivement une première et une deuxième géométrie de couplage d'outil de travail qui sont différentes l'une de l'autre.

L'appareil électroménager de préparation culinaire peut de plus comporter l'une ou l'autre des caractéristiques suivantes, prises seules ou en combinaison.

Dans certains modes de réalisation, le deuxième satellite d'entraînement tourne, autour du deuxième axe de travail, à une vitesse de rotation dont la valeur absolue est supérieure à la valeur absolue de la vitesse de rotation du premier satellite d'entraînement autour du premier axe de travail, par exemple comprise entre 1,1 et 2,0 fois la vitesse de rotation du premier satellite d'entraînement autour du premier axe de travail.

Dans certains modes de réalisation, la première roue dentée d'entraînement engrène directement avec la couronne périphérique, sans élément mécanique intermédiaire.

Dans certains modes de réalisation, la deuxième roue dentée d'entraînement engrène directement avec la première roue dentée d'entraînement sans élément mécanique intermédiaire.

Dans certains modes de réalisation, la deuxième roue dentée d'entraînement coopère avec la première roue dentée d'entraînement indirectement, par l'intermédiaire d'au moins une roue de transmission intermédiaire, montée libre en rotation sur le porte-satellites, de telle sorte que la première roue dentée d'entraînement entraîne en rotation la deuxième roue dentée d'entraînement et le deuxième satellite d'entrainement en rotation sur eux-mêmes autour du deuxième axe de travail, par l'intermédiaire de l'au moins une roue de transmission intermédiaire.

Dans certains modes de réalisation, la deuxième roue dentée d'entraînement coopère avec la première roue dentée d'entraînement indirectement, par l'intermédiaire d'une unique roue de transmission intermédiaire, l'unique roue de transmission intermédiaire engrenant directement avec la première roue dentée d'entraînement et, simultanément, engrenant directement avec la deuxième roue dentée d'entraînement.

Dans certains modes de réalisation, la deuxième roue dentée d'entraînement présente un nombre de dents différent de celui de la première roue dentée d'entraînement.

Dans certains modes de réalisation, la deuxième roue dentée d'entraînement présente un nombre de dents inférieur à celui de la première roue dentée d'entraînement de telle sorte que, pour une vitesse donnée du porte-satellites, le deuxième satellite d'entraînement tourne, autour du deuxième axe de travail, à une vitesse de rotation dont la valeur absolue est supérieure à la valeur absolue de la vitesse de rotation du premier satellite d'entraînement autour du premier axe de travail.

Dans certains modes de réalisation, la première roue dentée d'entraînement, et ladite au moins une roue de transmission intermédiaire lorsque présente, présente(nt) une unique denture externe. Ainsi, en l'absence de roue de transmission intermédiaire, l'unique denture externe de la première roue dentée d'entraînement est entraînée par la couronne périphérique, et entraîne la deuxième roue dentée d'entraînement. Ainsi en présence d'au moins une roue de transmission intermédiaire, l'unique denture externe de la première roue dentée d'entraînement est entraînée par la couronne périphérique, et entraîne la ou l'une des roue(s) de transmission intermédiaire(s). Lorsqu'une seule roue de transmission intermédiaire est présente, la denture externe de la roue de transmission intermédiaire est entraînée par la couronne périphérique et entraîne la deuxième roue dentée d'entraînement. Lorsque plusieurs roues de transmission intermédiaires sont présente, la denture externe de chaque roue de transmission intermédiaire est entraînée par la première roue dentée d'entraînement ou par une autre roue de transmission intermédiaire, et entraine la deuxième roue dentée d'entraînement ou une autre roue de transmission intermédiaire.

Dans certains modes de réalisation, la couronne périphérique est une couronne dentée qui comporte une unique denture interne, la première roue dentée d'entraînement est une roue dentée comportant une unique denture externe qui engrène directement avec la denture interne de la couronne périphérique, et la deuxième roue dentée d'entraînement comporte une denture externe qui engrène directement avec la denture externe de la première roue dentée d'entraînement.

Dans certains modes de réalisation, le premier axe de travail et le deuxième axe de travail présentent le même excentrement par rapport à l'axe central.

L'invention concerne aussi un système électroménager de préparation culinaire comprenant :
▪ un appareil électroménager de préparation culinaire ayant l'une quelconque des caractéristiques précédentes ;
▪ un premier outil de travail configuré pour permettre son accouplement sur le premier coupleur de l'appareil électroménager de préparation culinaire ;
▪ un deuxième outil de travail configuré pour permettre son accouplement sur le deuxième coupleur de l'appareil électroménager de préparation culinaire.

Dans un tel système électroménager de préparation culinaire, le premier outil de travail peut être configuré pour interdire son accouplement sur le deuxième coupleur et/ou le deuxième outil de travail peut être configuré pour interdire son accouplement sur le premier coupleur.

Dans un tel système électroménager de préparation culinaire, le premier coupleur peut être configuré pour interdire l'accouplement du deuxième outil de travail et/ou le deuxième coupleur peut être configuré pour interdire l'accouplement du premier outil de travail.

Un tel système électroménager de préparation culinaire peut être configuré pour empêcher le montage simultané d'un outil de travail sur le premier coupleur et d'un autre outil de travail sur le deuxième coupleur.

### Brève description des dessins

**[****Fig. 1****]** La figure **1** est une vue schématique générale en perspective d'un appareil électroménager de préparation culinaire dans lequel l'invention peut être mis en œuvre.
**[****Fig. 2**] La figure **2** est une vue schématique de côté, partielle, d'une partie d'un appareil électroménager de préparation culinaire dans lequel l'invention peut être mis en œuvre.
**[****Fig. 3**] La figure **3** est une vue schématique en perspective, partielle, d'une partie d'un appareil électroménager de préparation culinaire comprenant deux coupleurs pour deux outils de travail.
**[****Fig. 4**] La figure **4** est une vue schématique en perspective illustrant une couronne périphérique et un porte-satellites avec deux satellites d'entraînement, selon un premier mode de réalisation de l'invention.
**[****Fig. 5**] La figure **5** est une vue schématique en perspective éclatée illustrant un porte-satellites avec deux satellites d'entraînement, analogue à celui de la **Fig. 4**.
**[****Fig. 6****].** La figure **6** est une vue schématique de dessus des éléments de la **Fig. 4**.
**[****Fig. 7****].** La figure **7** est une vue analogue à celles de la **Fig. 4****,** illustrant un deuxième mode de réalisation de l'invention.
**[****Fig. 8****].** La figure **8** est une vue analogue à celles de la **Fig. 5****,** illustrant le deuxième mode de réalisation de l'invention.
**[****Fig. 9****].** La figure **9** est une vue analogue à celles de la **Fig. 6****,** illustrant le deuxième mode de réalisation de l'invention.

### Description des modes de réalisation

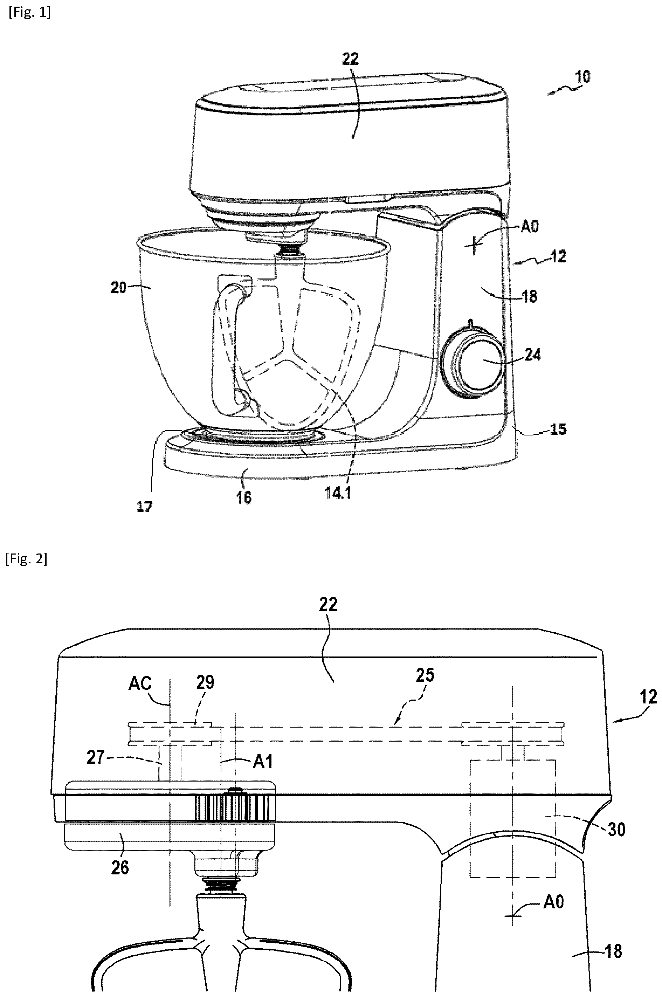

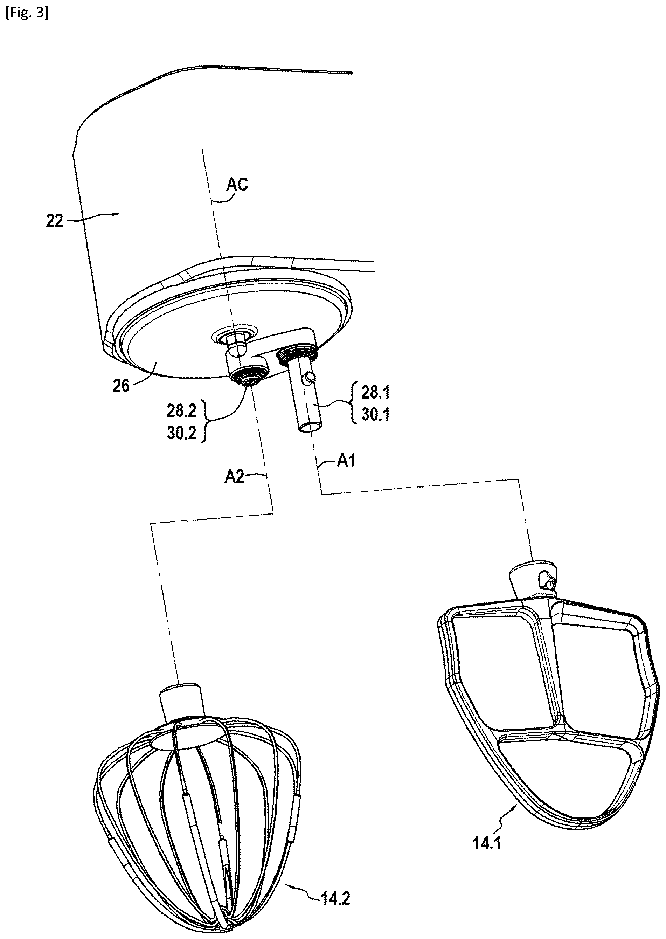

Les **Figs. 1 à 3** représentent un système électroménager de préparation culinaire **10** comprenant d'une part un appareil électroménager de préparation culinaire **12,** de type robot pâtissier, et d'autre part un premier outil de travail **14.1** et un deuxième outil de travail **14.2** destinés à être montés sur l'appareil électroménager de préparation culinaire **12** pour agir sur des aliments dans le cadre d'une préparation culinaire. Dans les exemples qui vont suivre, le premier outil de travail **14.1** est par exemple un outil pétrisseur, tandis que le deuxième outil de travail **14.2** est par exemple un fouet. Dans le cas général, le premier outil de travail **14.1** et le deuxième outil de travail **14.2** sont deux outils de travail de types différents, présentant une géométrie différente, notamment au niveau des surfaces actives de l'outil de travail qui sont celles prévues pour agir sur des aliments dans le cadre de la préparation culinaire pour laquelle ils sont prévus. Ces deux outils sont de préférence prévus pour être mis en œuvre de manière optimale à des vitesses de rotation autour de leur axe de travail qui sont différentes.

L'appareil électroménager de préparation culinaire **12** comprend un socle **15,** ici en forme de pied, comportant une embase **16** sensiblement horizontale et un jambage **18** qui s'étend verticalement vers le haut depuis l'embase **16.** Le socle **15** est destiné à reposer sur un plan de travail horizontal. L'embase **16** comporte une zone d'accueil **17** configurée pour recevoir un récipient de travail **20,** ici sous la forme d'une cuve, généralement amovible. Le récipient de travail **20** est par exemple monté de manière amovible sur la zone d'accueil **17** de l'embase **16** par une liaison à baïonnette. L'appareil électroménager de préparation culinaire **12** comprend aussi une tête **22** qui, dans cet exemple, est articulée sur le socle **15** autour d'un axe horizontal **A0,** ici au niveau du jambage **18.** Dans les cas où la tête **22** est articulée autour de l'axe horizontal **A0,** elle peut être mobile entre une position relevée, non représentée, dans laquelle le récipient de travail **20** peut être facilement retiré de l'embase **16,** et une position de travail, illustrée notamment sur la **Fig. 1****.** Les notions de « horizontal », « vertical », « haut » et « bas », et les notions d'orientations qui en découlent, se réfèrent à des orientations normales de l'appareil électroménager de préparation culinaire **12** en situation de fonctionnement lorsque le socle **15** est posé sur un plan de travail horizontal, et correspondent à la représentation des figures.

La tête **22** de l'appareil électroménager de préparation culinaire **12** présente une forme qui s'étend selon une direction longitudinale, horizontale en position de travail, avec une portion longitudinale arrière par laquelle elle est liée au jambage **18** du socle **15,** et une partie longitudinale avant qui s'étend en surplomb au-dessus de l'embase **16** et du récipient de travail **20.** La tête **22** peut renfermer un moteur **30,** de préférence un moteur électrique, illustré sur la **Fig. 2****,** dont la mise en marche et la vitesse peuvent être contrôlées par exemple par un bouton de commande **24** disposé par exemple sur une face latérale du jambage **18.** Le moteur **30** agencé à l'intérieur de la tête **22** comporte un arbre moteur orienté selon un axe moteur qui, suivant les conceptions, peut notamment être horizontal ou vertical. En alternative, le moteur **30** peut notamment être agencé dans le socle **15.**

De manière connue en soi, la portion longitudinale avant de la tête **22** comporte un porte-satellites **26** comprenant des moyens pour l'entraînement d'un premier outil de travail **14.1,** et même d'un deuxième outil de travail **14.2,** selon un mouvement planétaire. À cet effet, le porte-satellites **26** est mobile en rotation autour d'un axe central **AC.** Dans les exemples illustrés, l'axe central **AC** est fixe par rapport à la tête **22.** Le porte-satellites **26** est entraîné par le moteur **30** par l'intermédiaire d'une chaîne cinématique **25** selon une conception très largement connue de l'homme du métier. Chacun des premier outil de travail **14.1** et deuxième outil de travail **14.2** est destiné à être monté sur le porte-satellites **26** pour être entraîné dans un mouvement de travail par le porte-satellites **26.** En position de travail, le premier outil de travail **14.1** ou le deuxième outil de travail **14.2** monté sur le porte-satellites **26** est engagé à l'intérieur du récipient de travail **20** pour agir sur des aliments contenus dans le récipient de travail **20.**

Dans les exemples illustrés, le porte-satellites **26** est réalisé sous la forme d'une platine en forme de disque. Le porte-satellites **26** est monté solidaire à l'extrémité inférieure d'un arbre d'entrainement **27** dont l'axe est l'axe central **AC.** L'arbre d'entraînement **27** est reçu dans la tête **22** et est guidé, à l'intérieur de la tête **22,** en rotation autour de l'axe central **AC.** L'arbre d'entrainement **27** porte une roue d'entrainement **29** qui fait partie de la chaine cinématique **25** par laquelle le porte-satellites **26** est entraîné par le moteur **30.** Ici, la roue d'entraînement **29** est agencée sur une portion supérieure de l'arbre d'entraînement **27** qui s'étend par exemple au-dessus d'une paroi horizontale interne (non représentée) au travers de laquelle l'arbre d'entraînement **27** du porte-satellites peut être guidé en rotation.

Le porte-satellites **26** porte un premier satellite d'entraînement **28.1** qui est monté à libre rotation sur le porte-satellites **26** autour d'un premier axe de travail **A1,** parallèle à l'axe central **AC** et excentré par rapport à l'axe central **AC.**

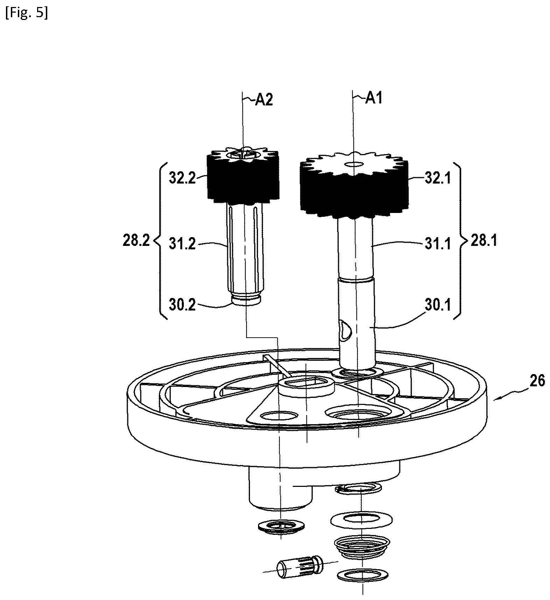

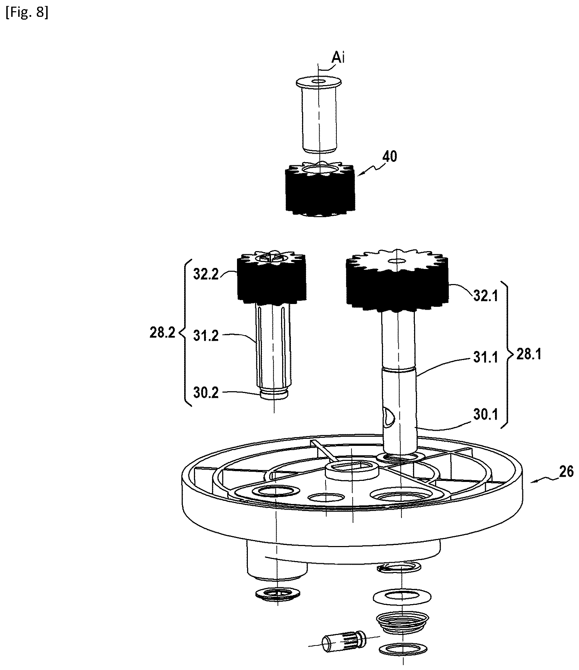

Dans les exemples illustrés, comme on le voit notamment sur les **Figs. 5** et **8****,** le premier satellite d'entraînement **28.1** comporte une tige **31.1** qui s'étend selon le premier axe de travail **A1** et qui est montée à rotation au travers de la platine en forme de disque qui forme le porte-satellites **26.** Le premier satellite d'entraînement **28.1** comporte ainsi une portion inférieure qui dépasse en dessous de la face inférieure du porte-satellites **26,** en regard donc de la zone d'accueil **17,** et une portion supérieure qui dépasse au-dessus d'une face supérieure du porte-satellites **26.** Dans les exemples illustrés, la portion supérieure du premier satellite d'entraînement **28.1** s'étend donc dans un volume protégé, au-dessus du porte-satellites **26,** que l'on peut considérer comme étant inclus dans la tête **22.**

Le premier satellite d'entraînement **28.1** comporte un premier coupleur **30.1** configuré pour permettre un accouplement et un désaccouplement du premier outil de travail **14.1** sur le premier satellite d'entraînement **28.1,** dans une configuration de travail, et pour assurer l'entraînement en rotation du premier outil de travail **14.1** autour du premier axe de travail **A1** par rapport au porte-satellites **26.** Le premier coupleur **30.1** est agencé en regard de la zone d'accueil **17.** Dans les exemples illustrés, le premier coupleur **30.1** est agencé à l'extrémité inférieure de la tige **31.1** du premier satellite d'entraînement **28.1,** donc en-dessous du porte-satellites **26.**

Le premier satellite d'entraînement **28.1** comporte aussi une première roue dentée d'entraînement **32.1** qui a pour axe le premier axe de travail **A1,** et qui est solidaire en rotation du premier satellite d'entraînement **28.1.** Dans les exemples, cela résulte du fait qu'elle est montée solidaire de sa tige **31.1.** De manière connue, la première roue dentée d'entraînement **32.1** coopère avec une denture interne d'une couronne périphérique **34** ayant l'axe central AC comme axe de symétrie pour, lors d'une rotation différentielle du porte-satellites **26** par rapport à la couronne périphérique **34,** provoquer une rotation du premier satellite d'entraînement **28.1** sur lui-même autour du premier axe de travail **A1.**

Dans les exemples illustrés, la première roue dentée d'entraînement **32.1** engrène directement avec la denture interne de la couronne périphérique **34,** donc sans élément mécanique intermédiaire. Cependant, on pourrait prévoir que la première roue dentée d'entraînement **32.1** coopère indirectement avec la denture interne de la couronne périphérique **34,** par exemple par l'intermédiaire d'une roue dentée intermédiaire.

Dans les exemples illustrés, la couronne périphérique **34** est fixe par rapport à la tête **22,** mais on pourrait prévoir que la couronne périphérique **34** soit entraînée en rotation autour de l'axe central **AC** par rapport à la tête **22,** notamment dans un sens opposé au sens de rotation du porte-satellites **26** autour de l'axe central **AC.**

Dans les exemples illustrés, la première roue dentée d'entraînement **32.1** est portée par la portion supérieure du premier satellite d'entraînement **28.1.** Elle est donc agencée au-dessus du porte-satellites **26,** en l'occurrence au-dessus de la platine en forme de disque. La première roue dentée d'entraînement **32.1** est donc reçue dans un volume protégé, au-dessus du porte-satellites **26,** et n'est pas apparente depuis l'extérieur de l'appareil électroménager de préparation culinaire **12.**

Dans les exemples illustrés, la couronne périphérique **34** est portée par la tête **22** et elle est fixe par rapport à la tête **22.** Elle est agencée juste au-dessus du porte-satellites **26,** en l'occurrence dans le volume protégé au-dessus du porte-satellites **26.** Dans les exemples illustrés, la couronne périphérique **34** présente sensiblement la même dimension que le porte-satellites **26** selon une direction diamétrale par rapport à l'axe central **AC.**

Le porte-satellites **26** porte un deuxième satellite d'entraînement **28.2,** distinct du premier satellite d'entraînement **28.1.** Ce deuxième satellite d'entraînement **28.2** est lui aussi monté à libre rotation sur le porte-satellites **26** autour d'un deuxième axe de travail **A2,** lui aussi parallèle à l'axe central **AC** et excentré par rapport à l'axe central **AC.** Le deuxième axe de travail **A2** est distinct du premier axe de travail **A1.**

Dans les exemples illustrés, le deuxième satellite d'entraînement **28.2** comporte une tige **31.2** qui s'étend selon le deuxième axe de travail **A2** et qui est montée à rotation au travers de la platine en forme de disque qui forme le porte-satellites **26.** Le deuxième satellite d'entraînement **28.2** comporte ainsi une portion inférieure qui dépasse en dessous de la face inférieure du porte-satellites **26,** en regard donc de la zone d'accueil **17,** et une portion supérieure qui dépasse au-dessus d'une face supérieure du porte-satellites **26.** Dans les exemples illustrés, la portion supérieure du deuxième satellite d'entraînement **28.2** s'étend donc dans le même volume protégé que la portion supérieur du premier satellite d'entraînement **28.1,** au-dessus du porte-satellites **26.**

De manière analogue au premier satellite d'entraînement **28.1,** le deuxième satellite d'entraînement **28.2** comporte un coupleur, ici nommé deuxième coupleur **30.2,** qui est configuré pour permettre un accouplement et un désaccouplement d'un deuxième outil de travail **14.2** sur le deuxième satellite d'entraînement **28.2,** dans une configuration de travail, et pour assurer l'entraînement en rotation du deuxième outil de travail **14.2** autour du deuxième axe de travail **A2** par rapport au porte-satellites **26.** Le deuxième coupleur **30.2** est agencé en regard de la zone d'accueil **17.** Dans les exemples illustrés, le deuxième coupleur **30.2** est lui aussi agencé à l'extrémité inférieure de la tige **31.2** du deuxième satellite d'entraînement **28.2,** donc en-dessous du porte-satellites **26.**

De même, le deuxième satellite d'entraînement **28.2** comporte une deuxième roue dentée d'entrainement **32.2** qui a pour axe le deuxième axe de travail **A2** et qui est solidaire en rotation du deuxième satellite d'entraînement **28.2.** Dans les exemples, cela résulte du fait qu'elle est montée solidaire de sa tige **31.2.**

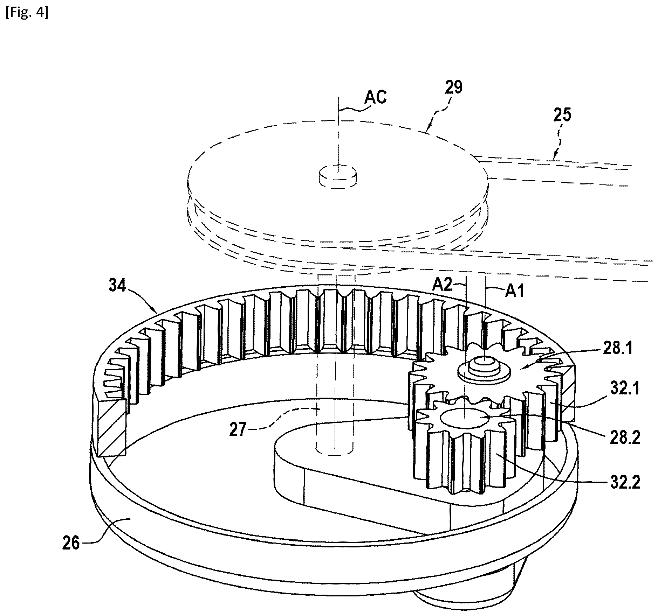

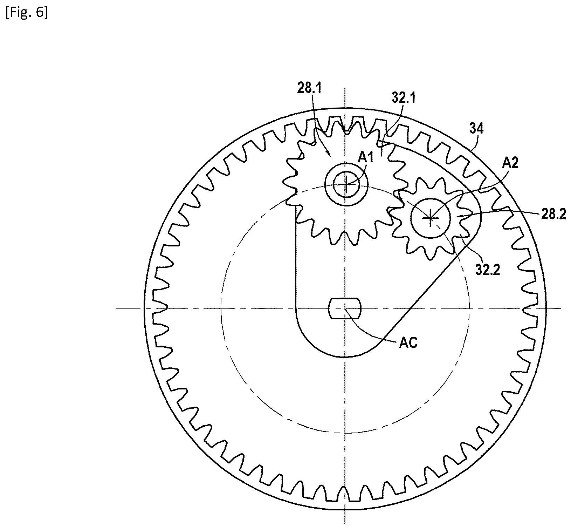

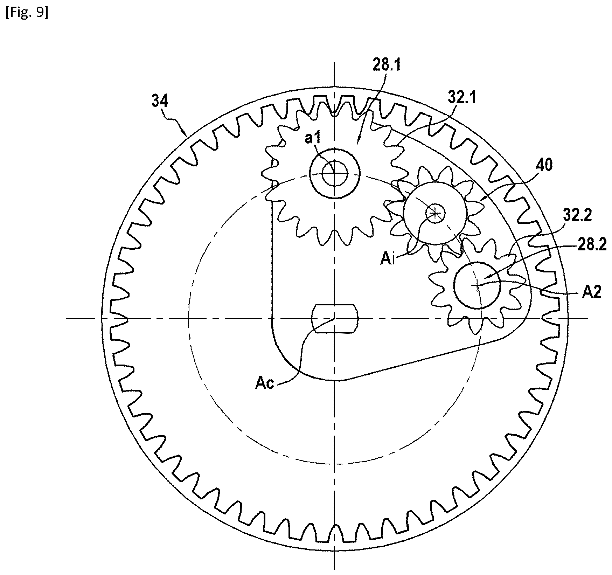

Comme on peut le voir sur les **Figs. 4 à 9****,** la deuxième roue dentée d'entrainement **32.2** coopère, directement ou par l'intermédiaire d'au moins une roue de transmission intermédiaire **40,** avec la première roue dentée d'entraînement **32.1,** de telle sorte que la première roue dentée d'entraînement **32.1** entraîne la deuxième roue dentée d'entraînement **32.2** et le deuxième satellite d'entrainement **28.2** en rotation sur eux-mêmes autour du deuxième axe de travail **A2.**

On note donc que la deuxième roue dentée d'entrainement **32.2** ne coopère pas directement avec la couronne périphérique **34,** au sens qu'elle n'est pas engrenée directement avec la denture de la couronne périphérique **34.** Cet entraînement en cascade permet de simplifier la construction et permet notamment de simplifier les tolérances géométriques des pièces et des assemblages. En effet, la première roue dentée d'entraînement **32.1** et la deuxième roue dentée d'entraînement **32.2** sont portées par une même pièce, à savoir le porte-satellites **26,** tout en étant chacune montées à rotation indépendamment l'une de l'autre sur ce porte-satellites **26.** Les chaines de cotes à respecter pour obtenir une coopération assurant l'entraînement de l'une par l'autre sont relativement courtes, et donc peuvent être respectées assez facilement lors de la fabrication et de l'assemblage, sans avoir à prendre des précautions de conceptions et de réalisation coûteuses à mettre en œuvre. En revanche, l'engrènement direct entre la couronne périphérique **34** et la première roue dentée d'entraînement **32.1** est plus complexe à réaliser car cela implique le porte-satellites **26** qui est une pièce mobile (en rotation) à la fois par rapport à la couronne périphérique **34** et par rapport à la première roue dentée d'entraînement **32.1.** La chaine de cotes à respecter est donc plus longue, impliquant plus de contraintes de fabrication et d'assemblage, donc inévitablement un coût de réalisation plus important. Cette chaine de cotes plus longue ne se retrouve donc pas au niveau de la deuxième roue dentée d'entrainement **32.2.**

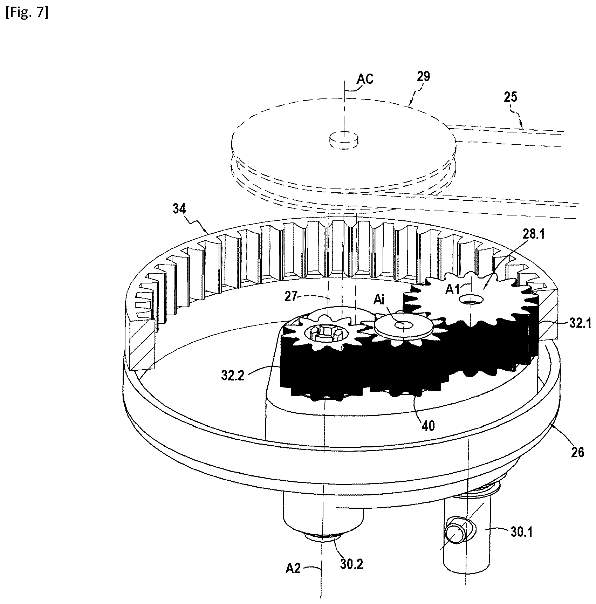

De plus, la couronne périphérique **34,** la première roue dentée d'entraînement **32.1,** la deuxième roue dentée d'entraînement **32.2** sont coplanaires, ce qui apparait notamment sur les **Figs. 4** et **7****.** Pour les exemples de réalisation dépourvus de roue de transmission intermédiaire **40,** la couronne périphérique **34,** la première roue dentée d'entraînement **32.1,** et la deuxième roue dentée d'entraînement **32.2** sont coplanaires, tel que représenté notamment sur la **Fig.** 4. Cela permet d'obtenir un appareil électroménager de préparation culinaire **12** particulièrement compact, notamment selon la direction de l'axe central **AC.** Au sens de la présente demande, cette condition est remplie s'il existe un plan perpendiculaire à l'axe central **AC** qui coupe la denture de chacune de la couronne périphérique **34,** de la première roue dentée d'entraînement **32.1,** et de la deuxième roue dentée d'entraînement **32.2.** Pour les exemples de réalisation comportant au moins une roue de transmission intermédiaire **40,** la couronne périphérique **34,** la première roue dentée d'entraînement **32.1,** ladite au moins une roue de transmission intermédiaire **40,** et la deuxième roue dentée d'entraînement **32.2** sont coplanaires, tel que représenté notamment sur la **Fig.** 7. Cela permet d'obtenir un appareil électroménager de préparation culinaire **12** particulièrement compact, notamment selon la direction de l'axe central **AC.** Au sens de la présente demande, cette condition est remplie s'il existe un plan perpendiculaire à l'axe central **AC** qui coupe la denture de chacune de la couronne périphérique **34,** de la première roue dentée d'entraînement **32.1,** de ladite au moins une roue de transmission intermédiaire **40,** et de la deuxième roue dentée d'entraînement **32.2.** Lorsque plusieurs roues de transmission intermédiaires **40** sont présentes, l'axe central **AC** coupe la denture de chacune des roues de transmission intermédiaires **40.**

On note que la couronne périphérique **34,** la première roue dentée d'entraînement **32.1** et la deuxième roue dentée d'entraînement **32.2** sont toutes agencées au-dessus du porte-satellites **26.**

Dans les exemples, la première roue dentée d'entraînement **32.1** et la deuxième roue dentée d'entrainement **32.2** sont des roues de géométrie cylindrique autour de leurs axes respectifs **A1, A2.** De la sorte, elles présentent chacune une denture de géométrie globale cylindrique autour de leurs axes respectifs **A1, A2**. Par conséquence, la géométrie de la denture de la couronne périphérique **34** est aussi une surface de géométrie globale cylindrique, cette fois ci autour de l'axe central **AC.**

Cependant, on pourrait prévoir d'autres géométries complémentaires. Ainsi on pourrait prévoir que la première roue dentée d'entraînement **32.1** et la deuxième roue dentée d'entrainement **32.2** soient des roues de géométrie conique autour de leurs axes respectifs **A1, A2,** présentant chacune une denture conique autour de leurs axes respectifs **A1, A2.** De plus, la denture de la couronne périphérique **34** serait dans ce cas aussi une denture conique, ainsi que celle(s) de la ou des roue(s) de transmission intermédiaire **40** lorsque présente(s).

Dans les exemples illustrés, la couronne périphérique **34** est une couronne dentée annulaire qui comporte une unique denture interne. La première roue dentée d'entraînement **32.1** est une roue dentée comportant une unique denture externe qui coopère par engrènement direct avec l'unique denture interne de la couronne périphérique **34.** De plus dans l'exemple des **Figs. 4 à 6****,** la deuxième roue dentée d'entraînement **32.2** comporte elle aussi une unique denture externe qui engrène directement avec l'unique denture externe de la première roue dentée d'entraînement **32.1.** Dans l'exemple des **Figs. 7 à 9****,** la roue de transmission intermédiaire **40** comporte elle aussi une unique denture externe qui engrène directement avec l'unique denture externe de la première roue dentée d'entraînement **32.1,** et la deuxième roue dentée d'entraînement **32.2** comporte une **unique** denture externe qui engrène directement avec l'unique denture externe de la roue de transmission intermédiaire **40.** La denture de la couronne ou d'une roue est unique dans la mesure où elle est définie par un nombre de dents présentant un profil de dent unique. Une denture unique de la couronne ou d'une roue peut présenter par exemple une gorge annulaire autour de l'axe de ladite couronne ou de ladite roue, la gorge séparant chaque dent de la denture unique en deux parties successivement selon la direction d'extension de la courbe génératrice de la dent.

Dans les exemples illustrés, les dentures des trois composants sont des dentures droites, avec des dents dont les génératrices sont rectilignes et parallèles aux axes respectifs des trois composants, qui sont eux-mêmes parallèles entre eux. Cependant, on pourrait prévoir que les dentures soient des dentures hélicoïdales, ou en chevrons, etc..., et ceci que la denture soit une denture cylindrique ou une denture conique.

Dans les exemples, la deuxième roue dentée d'entraînement **32.2** est portée par la portion supérieure du deuxième satellite d'entraînement **28.2.** Elle est donc agencée au-dessus du porte-satellites **26,** en l'occurrence au-dessus de la platine en forme de disque. La deuxième roue dentée d'entraînement **32.2** est donc reçue dans le même volume protégé que la première roue dentée d'entraînement **32.1** et que la couronne périphérique **34,** au-dessus du porte-satellites **26,** et n'est donc pas apparente depuis l'extérieur de l'appareil électroménager de préparation culinaire **12.**

Selon l'invention l'appareil électroménager de préparation culinaire **12** est du type dans lequel, pour une vitesse donnée du porte-satellites **26,** le premier satellite d'entraînement **28.1** et le deuxième satellite d'entraînement **28.2** tournent, autour de leur axe de travail respectif **A1, A2,** respectivement à des vitesses de rotation différentes l'une de l'autre en valeur absolue. De préférence pour une vitesse donnée du porte-satellites, le deuxième satellite d'entraînement **28.2** tourne autour du deuxième axe de travail **A2,** à une vitesse de rotation supérieure en valeur absolue à la valeur absolue de la vitesse de rotation du premier satellite d'entraînement **28.1** autour du premier axe de travail **A1.** Par exemple la deuxième roue dentée d'entraînement **32.2,** et donc le deuxième satellite d'entraînement **28.2** tournent, autour du deuxième axe de travail **A2,** à une vitesse de rotation dont la valeur absolue est comprise entre 1,1 et 2,0 fois la valeur absolue de la vitesse de rotation du premier satellite d'entraînement autour du premier axe de travail **A1.** Ceci est particulièrement avantageux car on peut alors entraîner le premier outil de travail à une première vitesse de travail, ou le deuxième outil de travail à une deuxième vitesse de travail, différente, notamment supérieure et par exemple comprise entre 1,1 et 2,0 fois la première vitesse de travail, ceci avec une même vitesse du moteur **30,** et avec une même vitesse de la chaîne cinématique entre le moteur et le porte-outil. Encore plus avantageux, sachant que la vitesse du moteur est généralement limitée d'une part avec une valeur minimale et d'autre part avec une valeur maximale, les deux vitesses différentes des deux coupleurs permettent d'élargir, en valeur absolue, le ratio de plages de valeurs pour les outils de travail. Ainsi, le premier coupleur sera utilisé pour les outils de travail qui nécessitent une faible vitesse, et éventuellement un fort couple, et le deuxième coupleur sera utilisé pour les outils de travail qui nécessitent une vitesse élevée, éventuellement sous un couple plus réduit.

Au total, l'appareil électroménager de préparation culinaire **12,** le premier outil de travail **14.1** et le deuxième outil de travail **14.2** appartiennent au système électroménager de préparation culinaire **10** qui comprend l'appareil électroménager de préparation culinaire **12,** au moins un premier outil de travail configuré pour permettre son accouplement sur le premier coupleur de l'appareil électroménager de préparation culinaire **12,** et au moins un deuxième outil de travail configuré pour permettre son accouplement sur le deuxième coupleur de l'appareil électroménager de préparation culinaire **12.**

Dans un premier mode de réalisation, illustré plus particulièrement aux **Figs. 4 à 6****,** la deuxième roue dentée d'entraînement **32.2** engrène directement avec la première roue dentée d'entraînement **32.1,** sans élément mécanique intermédiaire, notamment sans roue dentée intermédiaire. Dans ce mode de réalisation, la première roue dentée d'entrainement **32.1** et la deuxième roue dentée d'entraînement **32.2** tournent autour de leur axe respectif **A1, A2** selon des sens de rotation opposés.

Dans un deuxième mode de réalisation, illustré plus particulièrement aux **Figs. 7 à 9****,** la deuxième roue dentée d'entraînement **32.2** coopère avec la première roue dentée d'entraînement **32.1** indirectement, par l'intermédiaire d'une roue de transmission intermédiaire **40**. La roue de transmission intermédiaire **40** est montée libre en rotation sur le porte-satellites **26,** autour d'un axe intermédiaire **Ai** qui est parallèle aux axes de travail **A1** et **A2** respectivement de la première roue dentée d'entraînement **32.1** et de la deuxième roue dentée d'entraînement **32.2.** De la sorte, la première roue dentée d'entraînement **32.1** entraîne en rotation la deuxième roue dentée d'entraînement **32.2** et le deuxième satellite d'entrainement **28.2** en rotation sur eux-mêmes autour du deuxième axe de travail **A2,** par l'intermédiaire de la roue de transmission intermédiaire **40.** De préférence, comme dans la version illustrée sur les **Figs. 7 à 9****,** la deuxième roue dentée d'entraînement **32.2** coopère avec la première roue dentée d'entraînement **32.1** indirectement, par l'intermédiaire d'une unique roue de transmission intermédiaire **40,** l'unique roue de transmission intermédiaire **40** étant une roue dentée à denture externe qui, simultanément, engrène directement avec la première roue dentée d'entraînement **32.1** et avec la deuxième roue dentée d'entraînement **32.1.** Cependant, on pourrait prévoir que l'appareil électroménager de préparation culinaire **12** comporte plusieurs roues intermédiaires agencées en cascade entre la première roue d'entraînement et la deuxième roue d'entraînement, les roues intermédiaires étant des roues dentées à denture externes montées libres en rotation sur le porte-satellites. Le nombre de roues intermédiaires en cascade est par exemple un nombre impair, avec alors pour conséquence que la première roue dentée d'entrainement **32.1** et la deuxième roue dentée d'entraînement **32.2** tournent autour de leur axe de travail respectif **A1, A2** selon le même sens de rotation.

Pour les modes de réalisation comportant une unique roue de transmission intermédiaire **40,** et pour ceux comportant plusieurs roues de transmission intermédiaires, la ou les roues de transmission intermédiaires **40** sont coplanaires entre elles et coplanaires avec la couronne périphérique **34,** avec la première roue dentée d'entraînement **32.1** et avec la deuxième roue dentée d'entraînement **32.2.** Au sens de la présente demande, cette condition est remplie s'il existe un plan perpendiculaire à l'axe central **AC** qui coupe la denture de chacune de la couronne périphérique **34,** de la première roue dentée d'entraînement **32.1,** la deuxième roue dentée d'entraînement **32.2,** et de la ou les roues de transmission intermédiaire **40.**

Comme illustré dans les modes de réalisation illustrés, la deuxième roue dentée d'entraînement **32.2** présente un nombre de dents, et donc un diamètre, différent de celui de la première roue dentée d'entraînement **32.1,** en l'occurrence un nombre de dents inférieur. Dans les modes de réalisation dans lesquels la deuxième roue dentée d'entraînement **32.2** et la première roue dentée d'entraînement **32.1** engrène directement, ou dans lesquels la deuxième roue dentée d'entraînement **32.2** coopère avec la première roue dentée d'entraînement **32.1** par l'intermédiaire d'une unique roue de transmission intermédiaire **40,** le ratio des valeurs absolues des vitesses de rotation entre la deuxième roue dentée d'entraînement **32.2** et la première roue dentée d'entraînement **32.1** est inversement proportionnel au ratio du nombre de dents de la deuxième roue dentée d'entraînement **32.2** par rapport à la première roue dentée d'entraînement **32.1.**

Dans les exemples illustrés, le premier axe de travail **A1** et le deuxième axe de travail **A2** présentent le même excentrement par rapport à l'axe central **AC.** On peut dire qu'ils sont agencés sur le même diamètre, ou qu'ils sont agencés à la même distance de l'axe central **AC.** Cela permet d'avoir des géométries d'outils de travail comparables pour le premier outil de travail et pour le deuxième outil de travail, en relation avec la géométrie du récipient. Pour cela, il est important que la deuxième roue dentée d'entraînement **32.2** présente un nombre de dents, et donc un diamètre, différent de celui de la première roue dentée d'entraînement **32.1,** car, même avec des axes de travail agencés avec le même excentrement par rapport à l'axe central **AC,** on évite toute interférence entre la deuxième roue dentée d'entraînement **32.2** et la denture de la couronne périphérique **34.**

Cependant, on pourrait prévoir que le premier axe de travail **A1** et le deuxième axe de travail **A2** présentent un excentrement différent, par rapport à l'axe central **AC,** avec par exemple un deuxième axe de travail **A2** ayant un excentrement inférieur à celui du premier axe de travail **A1** par rapport à l'axe **AC.** Avec un tel agencement, on obtient la possibilité, pour un même récipient de travail, d'avoir un deuxième outil de travail **14.2** ayant un diamètre plus grand, au bénéfice d'une plus grande vitesse tangentielle de l'outil de travail pour une même vitesse de rotation autour du deuxième axe de travail **A2.**

Dans certains modes de réalisation ne faisant pas partie de l'invention, le premier coupleur **30.1** et le deuxième coupleur **30.2** peuvent présenter la même géométrie de couplage d'outil de travail. Dans ce cas, il est envisageable qu'un même outil de travail puisse être monté indifféremment sur le premier coupleur **30.1,** donc sur le premier satellite d'entraînement **28.1** ou sur le deuxième coupleur **30.2,** donc sur le deuxième satellite d'entraînement **28.2.**

Le premier coupleur **30.1** et le deuxième coupleur **30.2** présentent respectivement une première et une deuxième géométrie de couplage d'outil de travail qui sont différentes l'une de l'autre.

Il est en effet connu différentes géométries de couplage entre un outil de travail et l'appareil électroménager de préparation culinaire **12.** Une géométrie de couplage détermine un mécanisme de couplage dont le rôle est d'assurer la fixation de l'outil de travail sur le satellite d'entraînement dans des conditions aptes à permettre à l'outil de travail de réaliser le travail de préparation culinaire pour lequel il est conçu. Typiquement, la géométrie de couplage permet un blocage de l'outil de travail par rapport au coupleur selon toutes les directions. On connait par exemple des géométries de couplage définissant un mécanisme de couplage de type baïonnette. On connait aussi des géométries de couplage définissant un mécanisme de couplage comportant une tige avec méplat, ou une tige crantée, ou une tige avec une ou plusieurs excroissances radiales, faisant partie soit de l'outil de travail soit du coupleur, et un alésage de forme complémentaire sur l'autre parmi l'outil de travail et le coupleur. Généralement, la géométrie de couplage définit un mécanisme de couplage qui permet un accouplement et un désaccouplement manuel de l'outil de travail sur le coupleur, donc sans nécessiter l'utilisation d'outils pour réaliser le couplage.

En ayant des géométries de couplage différentes d'une part pour le premier coupleur **30.1** et le premier outil de travail **14.1** et d'autre part pour le deuxième coupleur **30.2** et le deuxième outil de travail **14.2,** on peut adapter la géométrie de couplage au travail respectif prévu pour ces deux outils de travail, et notamment au couple des efforts qui s'appliquent sur l'outil de travail, donc sur le coupleur, lors du travail.

Notamment, on peut avantageusement prévoir que le premier coupleur **30.1** soit configuré pour interdire l'accouplement du deuxième outil de travail **14.2** et/ou en ce que le deuxième coupleur **30.2** soit configuré pour interdire l'accouplement du premier outil de travail **14.1.** On note qu'il est possible d'interdire le montage du premier outil de travail **14.1** sur le deuxième coupleur **30.2** sans nécessairement interdire le montage du deuxième outil de travail **14.2** sur le premier coupleur **30.1,** ou inversement.

Avantageusement, le système électroménager de préparation culinaire **10** peut être configuré pour empêcher le montage simultané du premier outil de travail **14.1** sur le premier coupleur **30.1** et du deuxième outil de travail **14.2** sur le deuxième coupleur **30.2.** Par exemple, un tel système électroménager de préparation culinaire **10** peut comporter un cache qui serait monté mobile sur le porte-satellites entre deux positions, une dans laquelle il donnerait accès au premier coupleur et empêcherait l'accès au deuxième coupleur et l'autre dans laquelle il donnerait accès au deuxième coupleur et empêcherait l'accès au premier coupleur. En complément ou en alternative, un tel système électroménager de préparation culinaire **10** pourrait comprendre un cache qui serait lié à un outil de travail et qui, lorsque cet outil de travail est accouplé sur le coupleur correspondant, empêcherait l'accès à l'autre coupleur.

De préférence, le premier axe de travail **A1** et le deuxième axe de travail **A2** sont écartés l'un de l'autre autour de l'axe central **AC** d'un angle inférieur ou égal à 180 degrés d'angle, de préférence encore inférieur ou égal à 120 degrés d'angle, de préférence encore davantage inférieur ou égal à 90 degrés d'angle. Dans le premier exemple illustré, dans lequel la deuxième roue dentée d'entraînement **32.2** engrène directement avec la première roue dentée d'entraînement **32.1,** sans élément mécanique intermédiaire, le premier axe de travail **A1** et le deuxième axe de travail **A2** sont écartés l'un de l'autre autour de l'axe central **AC** d'un angle strictement inférieur ou égal à 45 degrés d'angle. Dans le deuxième exemple illustré, dans lequel la deuxième roue dentée d'entraînement **32.2** coopère indirectement avec la première roue dentée d'entraînement **32.1** par l'intermédiaire d'une roue de transmission intermédiaire **40,** le premier axe de travail **A1** et le deuxième axe de travail **A2** sont écartés l'un de l'autre autour de l'axe central **AC** d'un angle compris dans la gamme allant de 45 degrés d'angle à 90 degrés d'angle.

Pour les modes de réalisation comportant une unique roue de transmission intermédiaire **40,** ou plusieurs, la roue de transmission intermédiaire **40** peut être agencée de telle sorte que son axe de rotation **Ai** présente lui aussi le même excentrement par rapport à l'axe central **AC** que le premier axe de travail **A1** et que le deuxième axe de travail **A2,** tel que dans le mode de réalisation des **Figs. 7 à 9****.**Cependant, l'axe de rotation **Ai** pourrait présenter un excentrement différent de celui de l'un ou l'autre de ces axes, voire différent de celui de l'un et de l'autre de ces axes. Par exemple, on pourrait prévoir que la roue de transmission intermédiaire **40** soit agencée de telle sorte que son axe de rotation **Ai** présente, par rapport à l'axe central **AC,** un excentrement inférieur à celui du premier axe de travail **A1,** et éventuellement aussi inférieur à celui deuxième axe de travail **A2.** Avec un agencement de la roue de transmission intermédiaire **40** radialement vers l'intérieur par rapport à la première roue dentée d'entraînement **32.1** et par rapport à la deuxième roue dentée d'entraînement **32.2,** on peut, pour des diamètres de roues identiques, rapprocher angulairement la première roue dentée d'entraînement **32.1** et la deuxième roue dentée d'entraînement **32.2,** avec un écartement angulaire réduit entre le premier axe de travail **A1** et le deuxième axe de travail **A2** autour de l'axe central **AC,** cet écartement angulaire pouvant alors être inférieur à 45 degrés d'angle.

En regroupant les deux coupleurs dans un même secteur angulaire du porte-satellites **26,** par exemple avec un écartement angulaire entre le premier axe de travail **A1** et le deuxième axe de travail **A2** autour de l'axe central **AC** qui est inférieur à 90 degrés d'angle, voire inférieur à 45 degrés d'angle, on peut les agencer dans un même secteur renforcé du porte-satellites **26.**

L'invention permet de réaliser un appareil électroménager de préparation culinaire comportant deux coupleurs de sortie, qui peuvent notamment présenter des vitesses de rotation différentes, par un simple changement du porte-satellites **26,** sans autre modifications d'un appareil existant comportant un seul coupleur de sortie sur son porte-satellite. En effet, dans les deux cas, le porte-satellites comporte une unique roue dentée d'entraînement qui engrène directement avec la couronne périphérique.

## Revendications

1. Appareil électroménager de préparation culinaire **(12)** comportant :
• un socle **(15)** présentant une embase **(16)** ayant une zone d'accueil **(17)** configurée pour recevoir un récipient de travail **(20)** ;
• une tête **(22)** liée au socle **(15),** la tête **(22)** ayant un porte-satellites **(26)** qui est entraîné en rotation autour d'un axe central **(AC)** par un moteur **(30),** et qui porte :
▪ un premier satellite d'entraînement **(28.1),** monté à libre rotation sur le porte-satellites **(26)** autour d'un premier axe de travail **(A1),** parallèle à l'axe central **(AC)** et excentré par rapport à l'axe central **(AC),** le premier satellite d'entraînement **(28.1)** comportant :
◊ un premier coupleur **(30.1)** configuré pour permettre un accouplement et un désaccouplement d'un premier outil de travail **(14.1)** et pour assurer l'entraînement en rotation du premier outil de travail **(14.1)** autour du premier axe de travail **(A1)** par rapport au porte-satellites **(26),** le premier coupleur **(30.1)** étant agencé en regard de la zone d'accueil **(17)** ;
◊ une première roue dentée d'entraînement **(32.1)** qui a pour axe le premier axe de travail **(A1),** qui est solidaire en rotation du premier satellite d'entraînement **(28.1),** et qui coopère avec une denture interne d'une couronne périphérique **(34)** ayant l'axe central **(AC)** comme axe de symétrie pour, lors d'une rotation différentielle du porte-satellites **(26)** par rapport à la couronne périphérique **(34),** provoquer une rotation du premier satellite d'entraînement **(28.1)** sur lui-même autour du premier axe de travail **(A1)** ;
▪ un deuxième satellite d'entraînement **(28.2),** distinct du premier satellite d'entraînement **(28.1)** et monté à libre rotation sur le porte-satellites **(26)** autour d'un deuxième axe de travail **(A2),** parallèle à l'axe central **(AC)** et excentré par rapport à l'axe central **(AC)** tout en étant distinct du premier axe de travail **(A1),** le deuxième satellite d'entraînement **(28.2)** comportant :
◊ un deuxième coupleur **(30.2)** configuré pour permettre un accouplement et un désaccouplement d'un deuxième outil de travail (**14.2**) et pour assurer l'entraînement en rotation du deuxième outil de travail (**14.2**) autour du deuxième axe de travail **(A2)** par rapport au porte-satellites **(26),** le deuxième coupleur **(30.2)** étant agencé en regard de la zone d'accueil **(17)** ;
◊ une deuxième roue dentée d'entrainement **(32.2)** qui a pour axe le deuxième axe de travail **(A2)** et qui est solidaire en rotation du deuxième satellite d'entraînement **(28.2)** ;
l'appareil électroménager de préparation culinaire **(12)** étant du type dans lequel, pour une vitesse de rotation donnée du porte-satellites **(26),** le premier satellite d'entraînement **(28.1)** et le deuxième satellite d'entraînement **(28.2)** tournent, autour de leur axe de travail respectif **(A1, A2),** respectivement à des vitesses de rotation différentes l'une de l'autre en valeur absolue ;
la deuxième roue dentée d'entrainement **(32.2)** coopérant avec la première roue dentée d'entraînement **(32.1)** de telle sorte que la première roue dentée d'entraînement **(32.1)** entraîne la deuxième roue dentée d'entraînement **(32.2)** et le deuxième satellite d'entrainement (**28.2**) en rotation sur eux-mêmes autour du deuxième axe de travail **(A2),**
**caractérisé en ce que** la couronne périphérique **(34),** la première roue dentée d'entraînement **(32.1)** et la deuxième roue dentée d'entraînement **(32.2)** sont coplanaires, **et en ce que** le premier coupleur **(30.1)** et le deuxième coupleur **(30.2)** présentent respectivement une première et une deuxième géométrie de couplage d'outil de travail qui sont différentes l'une de l'autre.

2. Appareil électroménager de préparation culinaire **(12)** selon la revendication **1, caractérisé en ce que** le deuxième satellite d'entraînement **(28.2)** tourne, autour du deuxième axe de travail **(A2),** à une vitesse de rotation dont la valeur absolue est supérieure à la valeur absolue de la vitesse de rotation du premier satellite d'entraînement **(28.1)** autour du premier axe de travail **(A1),** par exemple comprise entre 1,1 et 2,0 fois la vitesse de rotation du premier satellite d'entraînement **(28.1)** autour du premier axe de travail **(A1).**

3. Appareil électroménager de préparation culinaire **(12)** selon l'une des revendications **1** ou **2, caractérisé en ce que** la première roue dentée d'entraînement **(32.1)** engrène directement avec la couronne périphérique **(34),** sans élément mécanique intermédiaire.

4. Appareil électroménager de préparation culinaire **(12)** selon l'une des revendications **1** à **3, caractérisé en ce que** la deuxième roue dentée d'entraînement **(32.2)** engrène directement avec la première roue dentée d'entraînement **(32.1),** sans élément mécanique intermédiaire.

5. Appareil électroménager de préparation culinaire **(12)** selon l'une quelconque des revendications **1** à **3, caractérisé en ce que** la deuxième roue dentée d'entraînement **(32.2)** coopère avec la première roue dentée d'entraînement **(32.1)** indirectement, par l'intermédiaire d'au moins une roue de transmission intermédiaire **(40),** montée libre en rotation sur le porte-satellites **(36),** de telle sorte que la première roue dentée d'entraînement **(32.1)** entraîne en rotation la deuxième roue dentée d'entraînement **(32.2)** et le deuxième satellite d'entrainement **(28.2)** en rotation sur eux-mêmes autour du deuxième axe de travail **(A2),** par l'intermédiaire de l'au moins une roue de transmission intermédiaire **(40).**

6. Appareil électroménager de préparation culinaire **(12)** selon la revendication **5, caractérisé en ce que** la deuxième roue dentée d'entraînement **(32.2)** coopère avec la première roue dentée d'entraînement (**32.1**) indirectement, par l'intermédiaire d'une unique roue de transmission intermédiaire **(40),** l'unique roue de transmission intermédiaire **(40)** engrenant directement avec la première roue dentée d'entraînement **(32.1)** et, simultanément, engrenant directement avec la deuxième roue dentée d'entraînement **(32.2).**

7. Appareil électroménager de préparation culinaire **(12)** selon l'une des revendications **1** à **6, caractérisé en ce que** la deuxième roue dentée d'entraînement **(32.2)** présente un nombre de dents différent de celui de la première roue dentée d'entraînement **(32.1).**

8. Appareil électroménager de préparation culinaire **(12)** selon l'une des revendications **1** à **7, caractérisé en ce que** la deuxième roue dentée d'entraînement **(32.2)** présente un nombre de dents inférieur à celui de la première roue dentée d'entraînement **(32.1)** de telle sorte que, pour une vitesse donnée du porte-satellites **(26),** le deuxième satellite d'entraînement **(28.2)** tourne, autour du deuxième axe de travail **(A2),** à une vitesse de rotation dont la valeur absolue est supérieure à la valeur absolue de la vitesse de rotation du premier satellite d'entraînement **(28.1)** autour du premier axe de travail **(A1).**

9. Appareil électroménager de préparation culinaire **(12)** selon l'une des revendications **1** à **8, caractérisé en ce que** la première roue dentée d'entraînement **(32.1),** et lorsque présente ladite au moins une roue de transmission intermédiaire **(40),** présente(nt) une unique denture externe.

10. Appareil électroménager de préparation culinaire **(12)** selon l'une des revendications **1** à **9, caractérisé en ce que** le premier axe de travail **(A1)** et le deuxième axe de travail **(A2)** présentent le même excentrement par rapport à l'axe central **(AC).**

11. Système électroménager de préparation culinaire **(10)** comprenant :
• un appareil électroménager de préparation culinaire **(12)** selon l'une des revendications **1** à **10** ;
• un premier outil de travail **(14.1)** configuré pour permettre son accouplement sur le premier coupleur **(30.1)** de l'appareil électroménager de préparation culinaire **(12)** ;
• un deuxième outil de travail **(14.2)** configuré pour permettre son accouplement sur le deuxième coupleur **(30.2)** de l'appareil électroménager de préparation culinaire **(12).**

12. Système électroménager de préparation culinaire **(10)** selon la revendication **11, caractérisé en ce que** le premier outil de travail (**14.1**) est configuré pour interdire son accouplement sur le deuxième coupleur **(30.2).**

13. Système électroménager de préparation culinaire **(10)** selon l'une quelconque des revendications **11** ou **12, caractérisé en ce que** le deuxième outil de travail **(14.2)** est configuré pour interdire son accouplement sur le premier coupleur **(30.1).**

14. Système électroménager de préparation culinaire **(10)** selon l'une quelconque des revendications **11** à **13, caractérisé en ce que** le premier coupleur **(30.1)** est configuré pour interdire l'accouplement du deuxième outil de travail **(14.2)** et/ou **en ce que** le deuxième coupleur **(30.2)** est configuré pour interdire l'accouplement du premier outil de travail **(14.1).**

## Patentansprüche

1. Elektrohaushaltsgerät zur Nahrungszubereitung **(12),** umfassend:
- einen Sockel **(15),** der eine Basis **(16)** aufweist, die eine Aufnahmezone **(17)** aufweist, die zum Aufnehmen eines Arbeitsbehälters **(20)** konfiguriert ist;
- einen Kopf **(22),** der mit dem Sockel **(15)** verbunden ist, wobei der Kopf **(22)** einen Planetenträger **(26)** aufweist, der von einem Motor **(30)** um eine Mittelachse **(AC)** herum in Drehung versetzt wird und der Folgendes trägt:
- einen erstenAntriebssatelliten **(28.1),** der auf dem Planetenträger **(26)** um eine erste Arbeitsachse **(A1)** herum frei drehbar montiert ist, dieparallelzuder Mittelachse **(AC)** undexzentrischin Bezug auf die Mittelachse **(AC)** vorliegt, wobei der ersteAntriebssatellit(**28.1**) Folgendes umfasst:
- einen ersten Koppler **(30.1),** der konfiguriert ist, um eine Kopplung und eine Entkopplung eines ersten Arbeitswerkzeugs **(14.1)** zu ermöglichen und um den Drehantrieb des ersten Arbeitswerkzeugs **(14.1)** um die erste Arbeitsachse **(A1)** herum in Bezug auf den Planetenträger **(26)** sicherzustellen, wobei der erste Koppler (**30.1**) gegenüber der Aufnahmezone **(17)** angeordnet ist;
- ein erstes Antriebszahnrad **(32.1),** das als Achse die erste Arbeitsachse **(A1)** aufweist, das drehfest mit dem ersten Antriebssatelliten **(28.1)** verbunden ist und das mit einer Innenverzahnung eines Umfangskranzes **(34)** zusammenwirkt, der die Mittelachse **(AC)** als Symmetrieachse aufweist, um bei einer differentiellen Drehung des Planetenträgers **(26)** in Bezug auf den Umfangskranz **(34)** eine Drehung des ersten Antriebssatelliten **(28.1)** um sich selbst um die erste Arbeitsachse **(A1)** herum zu bewirken;
- einenzweitenAntriebssatelliten(**28.2**), der sich von dem erstenAntriebssatelliten(**28.1**) unterscheidet und aufdemPlanetenträger **(26)** um eine zweiteArbeitsachse(**A2**) herum frei drehbar montiert ist, dieparallelzu der Mittelachse **(AC)** und exzentrisch in Bezug auf die Mittelachse **(AC)** vorliegt, undsichgleichzeitig von der ersten Arbeitsachse **(A1)** unterscheidet, wobei derzweiteAntriebssatellit**(28.2)** Folgendes umfasst:
- einen zweiten Koppler **(30.2),** der konfiguriert ist, um eine Kopplung und eine Entkopplung eines zweiten Arbeitswerkzeugs **(14.2)** zu ermöglichen und um den Drehantrieb des zweiten Arbeitswerkzeugs **(14.2)** um die zweite Arbeitsachse **(A2)** herum in Bezug auf den Planetenträger **(26)** sicherzustellen, wobei der zweite Koppler **(30.2)** gegenüber der Aufnahmezone **(17)** angeordnet ist;
- ein zweites Antriebszahnrad **(32.2),** das die zweite Arbeitsachse **(A2)** als Achse aufweist und das drehfest mit dem zweiten Antriebssatelliten **(28.2)** verbunden ist;
wobei das Elektrohaushaltsgerät zur Nahrungszubereitung **(12)** von dem Typ ist, bei dem für eine gegebene Drehgeschwindigkeit des Satellitenträgers **(26)** sich der erste Antriebssatellit **(28.1)** und der zweite Antriebssatellit **(28.2)** jeweils mit voneinander im Absolutwert unterschiedlichen Drehgeschwindigkeiten um ihre jeweilige Arbeitsachse **(A1, A2)** herum drehen;
wobei das zweite Antriebszahnrad **(32.2)** derart mit dem ersten Antriebszahnrad (**32.1**) zusammenwirkt, dass das erste Antriebszahnrad **(32.1)** das zweite Antriebszahnrad (**32.2**) und den zweiten Antriebssatelliten **(28.2)** um sich selbst um die zweite Arbeitsachse **(A2)** herum in Drehung versetzt;
**dadurch gekennzeichnet, dass** der Umfangskranz **(34),** das erste Antriebszahnrad **(32.1)** und das zweite Antriebszahnrad **(32.2)** koplanar sind, **und dadurch, dass** der erste Koppler **(30.1)** und der zweite Koppler **(30.2)** jeweils eine erste und eine zweite Kopplungsgeometrie des Arbeitswerkzeugs aufweisen, die sich voneinander unterscheiden.

2. Elektrohaushaltsgerät zur Nahrungszubereitung **(12)** nach Anspruch 1, **dadurch gekennzeichnet, dass** der zweite Antriebssatellit **(28.2)** sich mit einer Drehgeschwindigkeit um die zweite Arbeitsachse **(A2)** herum dreht, deren Absolutwert größer ist als der Absolutwert der Drehgeschwindigkeit des ersten Antriebssatelliten (**28.1**) um die erste Arbeitsachse **(A1),** zum Beispiel zwischen 1,1 und 2,0 Mal die Drehgeschwindigkeit des ersten Antriebssatelliten **(28.1)** um die erste Arbeitsachse (A1) herum.

3. Elektrohaushaltsgerät zur Nahrungszubereitung **(12)** nach einem der Ansprüche **1** oder **2**, **dadurch gekennzeichnet, dass** das erste Antriebszahnrad **(32.1)** direkt, ohne mechanisches Zwischenelement, in den Umfangskranz **(34)** eingreift.

4. Elektrohaushaltsgerät zur Nahrungszubereitung **(12)** nach einem der Ansprüche **1** bis **3**, **dadurch gekennzeichnet, dass** das zweite Antriebszahnrad **(32.2)** direkt, ohne mechanisches Zwischenelement, in das erste Antriebszahnrad **(32.1)** eingreift.

5. Elektrohaushaltsgerät zur Nahrungszubereitung **(12)** nach einem der Ansprüche **1** bis **3**, **dadurch gekennzeichnet, dass** das zweite Antriebszahnrad **(32.2)** mit dem ersten Antriebszahnrad **(32.1)** indirekt, über mindestens ein Zwischengetrieberad **(40),** das auf dem Planetenträger **(36)** frei drehbar montiert ist, derart zusammenwirkt, dass das erste Antriebszahnrad **(32.1)** das zweite Antriebszahnrad **(32.2)** und den zweiten Antriebssatelliten **(28.2)** über das mindestens eine Zwischengetrieberad **(40)** um die zweite Arbeitsachse **(A2)** herum um sich selbst in Drehung versetzt.

6. Elektrohaushaltsgerät zur Nahrungszubereitung **(12)** nach Anspruch **5**, **dadurch gekennzeichnet, dass** das zweite Antriebszahnrad **(32.2)** mit dem ersten Antriebszahnrad (**32.1**) indirekt über ein einzelnes Zwischengetrieberad **(40)** zusammenwirkt, wobei das einzelne Zwischengetrieberad **(40)** direkt in das erste Antriebszahnrad **(32.1)** eingreift und gleichzeitig direkt in das zweite Antriebszahnrad **(32.2)** eingreift.

7. Elektrohaushaltsgerät zur Nahrungszubereitung **(12)** nach einem der Ansprüche **1** bis **6**, **dadurch gekennzeichnet, dass** das zweite Antriebszahnrad **(32.2)** eine Anzahl von Zähnen aufweist, die sich von jener des ersten Antriebszahnrads **(32.1)** unterscheidet.

8. Elektrohaushaltsgerät zur Nahrungszubereitung **(12)** nach einem der Ansprüche **1** bis **7**, **dadurch gekennzeichnet, dass** das zweite Antriebszahnrad **(32.2)** derart eine geringere Anzahl von Zähnen aufweist als jene des ersten Antriebszahnrads **(32.1),** dass sich für eine gegebene Geschwindigkeit des Planetenträgers **(26)** der zweite Antriebssatellit **(28.2)** um die zweite Arbeitsachse **(A2)** mit einer Drehgeschwindigkeit herum dreht, deren Absolutwert größer als der Absolutwert der Drehgeschwindigkeit des ersten Antriebssatelliten **(28.1)** um die erste Arbeitsachse **(A1)** herum ist.

9. Elektrohaushaltsgerät zur Nahrungszubereitung **(12)** nach einem der Ansprüche **1** bis **8**, **dadurch gekennzeichnet, dass** das erste Antriebszahnrad **(32.1),** und wenn das mindestens eine Zwischengetrieberad **(40)** aufweist, eine einzige externe Zahnung aufweist/aufweisen.

10. Elektrohaushaltsgerät zur Nahrungszubereitung **(12)** nach einem der Ansprüche **1** bis **9**, **dadurch gekennzeichnet, dass** die erste Arbeitsachse **(A1)** und die zweite Arbeitsachse **(A2)** in Bezug auf die Mittelachse **(AC)** die gleiche Exzentrizität aufweisen.

11. Elektrohaushaltssystem zur Nahrungszubereitung **(10),** beinhaltend:
- ein Elektrohaushaltsgerät zur Nahrungszubereitung **(12)** nach einem der Ansprüche **1** bis **10**;
- ein erstes Arbeitswerkzeug **(14.1),** das konfiguriert ist, um seine Kopplung mit dem ersten Koppler **(30.1)** des Elektrohaushaltsgeräts zur Nahrungszubereitung **(12)** zu ermöglichen;
- ein zweites Arbeitswerkzeug **(14.2),** das konfiguriert ist, um seine Kopplung mit dem zweiten Koppler **(30.2)** des Elektrohaushaltsgeräts zur Nahrungszubereitung **(12)** zu ermöglichen.

12. Elektrohaushaltssystem zur Nahrungszubereitung **(10)** nach Anspruch **11**, **dadurch gekennzeichnet, dass** das erste Arbeitswerkzeug **(14.1)** konfiguriert ist, um seine Kopplung mit dem zweiten Koppler **(30.2)** zu verhindern.

13. Elektrohaushaltssystem zur Nahrungszubereitung **(10)** nach einem der Ansprüche **11** oder **12**, **dadurch gekennzeichnet, dass** das zweite Arbeitswerkzeug **(14.2)** konfiguriert ist, um seine Kopplung mit dem ersten Koppler **(30.1)** zu verhindern.

14. Elektrohaushaltssystem zur Nahrungszubereitung **(10)** nach einem der Ansprüche **11** bis **13**, **dadurch gekennzeichnet, dass** der erste Koppler **(30.1)** konfiguriert ist, um die Kopplung des zweiten Arbeitswerkzeugs **(14.2)** zu verhindern, und/oder dadurch, dass der zweite Koppler **(30.2)** konfiguriert ist, um die Kopplung des ersten Arbeitswerkzeugs **(14.1)** zu verhindern.

## Claims

1. Electric household apparatus for food preparation **(12),** having:
- a baseplate **(15)** having a base **(16)** having a receiving zone **(17)** configured to receive a working container **(20);**
- a head **(22)** connected to the baseplate **(15),** the head **(22)** having a planet wheel carrier **(26)** which is rotated about a central axis **(AC)** by a motor **(30),** and which carries:
- a first drive planet wheel (28.1), mounted **in** free rotation on the planet wheel carrier **(26)** about a first working axis (A1), parallel to the central axis (AC) and off-centre with respect **to** the central axis (AC), the first drive planet wheel **(28.1)** having:
- a first coupler **(30.1)** configured to enable a coupling and an uncoupling of a first working tool **(14.1)** and to ensure the rotation of the first working tool **(14.1)** about the first working axis **(A1)** with respect to the planet wheel carrier **(26),** the first coupler **(30.1)** being arranged facing the receiving zone **(17);**
- a first toothed drive wheel **(32.1)** which has for the axis, the first working axis **(A1),** which rotates integrally with the first drive planet wheel **(28.1),** and which cooperates with an internal toothing of a peripheral ring **(34)** having the central axis **(AC)** as the axis of symmetry to, during a differential rotation of the planet wheel carrier **(26)** with respect to the peripheral ring **(34),** cause a rotation of the first drive planet wheel **(28.1)** on itself about the first working axis **(A1);**
- a second drive planet wheel (28.2), distinct from the first drive planet wheel (28.1) and mounted in free rotation on the planet wheel carrier **(26)** about a second working axis **(A2),** parallel to the central axis **(AC)** and off-centre with respect to the central axis **(AC)** while being distinct from the first working axis **(A1),** the second drive planet wheel **(28.2)** having:
- a second coupler **(30.2)** configured to enable a coupling and an uncoupling of a second working tool **(14.2)** and to ensure the rotation of the second working tool **(14.2)** about the second working axis **(A2)** with respect to the planet wheel carrier **(26),** the second coupler **(30.2)** being arranged facing the receiving zone **(17);**
- a second toothed drive wheel **(32.2)** which has for the axis, the second working axis **(A2)** and which rotates integrally with the second drive planet wheel **(28.2);**
the electric household apparatus **(12)** for food preparation being of the type in which, for a given rotation speed of the planet wheel carrier **(26),** the first drive planet wheel **(28.1)** and the second drive planet wheel **(28.2)** rotate around their respective working axes **(A1, A2**) at rotation speeds that differ from one another in absolute value;
the second toothed drive wheel **(32.2)** cooperating with the first toothed drive wheel **(32.1)** such that the first toothed drive wheel **(32.1)** rotates the second toothed drive wheel **(32.2)** and the second drive planet wheel **(28.2)** on themselves about the second working axis **(A2),**
**characterised in that** the peripheral ring **(34),** the first toothed drive wheel **(32.1)** and the second toothed drive wheel **(32.2)** are coplanar, **and in that** the first coupler (**30.1**) and the second coupler **(30.2)** respectively have a first and a second working tool coupling geometry which are different from one another.

2. Electric household apparatus **(12)** for food preparation according to claim **1**, **characterised in that** the second drive planet wheel **(28.2)** rotates about the second working axis **(A2)** at a rotation speed whose absolute value is greater than the absolute value of the rotation speed of the first drive planet wheel **(28.1)** about the first working axis **(A1),** for example between 1.1 and 2.0 times the rotation speed of the first drive planet wheel **(28.1)** about the first working axis (A1).

3. Electric household apparatus **(12)** for food preparation according to any one of claims **1** or **2, characterised in that** the first toothed drive wheel **(32.1)** meshes directly with the peripheral ring **(34),** without any intermediate mechanical element.

4. Electric household apparatus **(12)** for food preparation according to any one of claims **1** to **3**, **characterised in that** the second toothed drive wheel **(32.2)** meshes directly with the first toothed drive wheel **(32.1),** without any intermediate mechanical element.

5. Electric household apparatus **(12)** for food preparation according to any one of claims **1** to **3, characterised in that** the second toothed drive wheel **(32.2)** cooperates with the first toothed drive wheel **(32.1)** indirectly, through at least one intermediate transmission wheel **(40),** mounted free in rotation on the planet wheel carrier **(36),** such that the first toothed drive wheel **(32.1)** rotates the second toothed drive wheel **(32.2)** and the second drive planet wheel **(28.2)** on themselves about the second working axis **(A2),** through the at least one intermediate transmission wheel **(40).**

6. Electric household apparatus **(12)** for food preparation according to claim **5, characterised in that** the second toothed drive wheel **(32.2)** cooperates with the first toothed drive wheel **(32.1)** indirectly, through one single intermediate transmission wheel **(40),** the single intermediate transmission wheel **(40)** meshing directly with the first toothed drive wheel **(32.1)** and, simultaneously, meshing directly with the second toothed drive wheel **(32.2).**

7. Electric household apparatus **(12)** for food preparation according to any one of claims **1** to **6, characterised in that** the second toothed drive wheel **(32.2)** has a number of teeth different from that of the first toothed drive wheel **(32.1).**

8. Electric household apparatus **(12)** for food preparation according to any one of claims **1** to **7, characterised in that** the second toothed drive wheel **(32.2)** has a number of teeth less than that of the first toothed drive wheel **(32.1),** such that, for a given speed of the planet wheel carrier **(26),** the second drive planet wheel **(28.2)** rotates, about the second working axis **(A2),** at a rotation speed, the absolute value of which is greater than the absolute value of the rotation speed of the first drive planet wheel **(28.1)** about the first working axis **(A1).**

9. Electric household apparatus **(12)** for food preparation according to any one of claims **1** to **8, characterised in that** the first toothed drive wheel **(32.1),** and, when present, said at least one intermediate transmission wheel **(40),** has/have a single external toothing.

10. Electric household apparatus **(12)** for food preparation according to any one of claims **1** to **9, characterised in that** the first working axis **(A1)** and the second working axis **(A2)** have the same off-centring with respect to the central axis **(AC).**

11. Electric household system **(10)** for food preparation comprising:
- an electric household apparatus **(12)** for food preparation according to any one of claims **1** to **10;**
- a first working tool **(14.1)** configured to enable its coupling on the first coupler **(30.1)** of the electric household apparatus for food preparation **(12);**
- a second working tool **(14.2)** configured to enable its coupling on the second coupler **(30.2)** of the electric household apparatus **(12)** for food preparation.

12. Electric household system **(10)** for food preparation according to claim **11, characterised in that** the first working tool **(14.1)** is configured to prohibit its coupling on the second coupler **(30.2).**

13. Electric household system **(10)** for food preparation according to any one of claims **11** or **12, characterised in that** the second working tool **(14.2)** is configured to prohibit its coupling on the first coupler **(30.1).**

14. Electric household system **(10)** for food preparation according to any one of claims **11 to 13, characterised in that** the first coupler **(30.1)** is configured to prohibit the coupling of the second working tool **(14.2)** and/or **in that** the second coupler **(30.2)** is configured to prohibit the coupling of the first working tool **(14.1).**
